# EUROPÄISCHE PATENTSCHRIFT

(11) **EP 2 270 325 B1**
(45) Veröffentlichungstag und Bekanntmachung des Hinweises auf die Patenterteilung: **03.09.2014**
(21) Anmeldenummer: 10006825.3
(22) Anmeldetag: 01.07.2010
(51) Int. Cl.: F02D 41/14, F02P 5/15, F02D 41/34, F02D 37/02

(54) **Verfahren zum Betrieb eines Verbrennungsmotors**
Method for operating a combustion engine
Procédé pour le fonctionnement d'un moteur à combustion interne

(30) Priorität: 04.07.2009 DE 102009031693
(43) Veröffentlichungstag der Anmeldung: 05.01.2011
(73) Patentinhaber: Andreas Stihl AG & Co. KG, 71336 Waiblingen (DE)
(72) Erfinder: Ostojic, Predag, 74321 Bietigheim (DE); Paa, Andreas, 71364 Winnenden (DE)
(74) Vertreter: Wasmuth, Rolf

(56) Entgegenhaltungen:
- DE-A1- 4 305 206
- DE-A1-102006 038 277
- US-A- 4 706 628

## Beschreibung

Die Erfindung betrifft ein Verfahren zum Betrieb eines Verbrennungsmotors.

Zum Betrieb von Verbrennungsmotoren muss das Verhältnis von Kraftstoff und Luft so gesteuert werden, dass das Gemisch im Brennraum sicher entflammt werden kann. Bei Verbrennungsmotoren in Kraftfahrzeugen ist üblicherweise eine im Abgasstrom angeordnete Lambda-Sonde verwendet. Bei kleinen und einfach aufgebauten Verbrennungsmotoren, wie sie beispielsweise in handgeführten Arbeitsgeräten wie Motorsägen, Freischneidern, Rasenmähern oder dgl. zum Einsatz kommen, ist üblicherweise keine Lambda-Sonde vorgesehen. Hier erfolgt die Steuerung der Gemischzusammensetzung dadurch, dass eine Störung in Form einer Änderung der zugeführten Kraftstoffmenge eingebracht und die sich ergebende Drehzahlreaktion des Motors ausgewertet wird. **Ein solches Verfahren ist aus der** DE 43 05 206 A1 **bekannt.** Je nach Betriebspunkt des Verbrennungsmotors erfolgt auf eine kurzzeitige Reduzierung oder Erhöhung der Einspritzmenge eine Drehzahlsteigerung oder eine Drehzahlreduzierung. Diese Drehzahlreaktion kann erfasst und daraus auf den Betriebspunkt des Verbrennungsmotors geschlossen werden. Ausgehend vom ermittelten Betriebspunkt kann dann ein gewünschter Betriebspunkt eingestellt werden.

**Die** DE 10 2006 038 277 A1 **offenbart ein Verfahren zum Regeln der Zusammensetzung eines Kraftstoff/Luft-Gemisches für einen Verbrennungsmotor, bei dem eine Störgröße eingeleitet und unmittelbar nach Einleitung der Störgröße die Aktivität einer Drehzahlregelschaltung, die die Momentandrehzahl der Kurbelwelle innerhalb vorgebbarer Grenzen hält, auswertet. Als Störgröße ist eine Änderung des Kraftstoff/Luft-Gemisches vorgesehen. Abhängig vom Ergebnis der Auswertung wird zumindest ein Anteil des Gemischs eingestellt.**

Die Änderung der Drehzahl ist - insbesondere bei der Einbringung von Kraftstoff in den Ansaugkanal oder ins Kurbelgehäuse eines Zweitaktmotors - sehr träge. Es dauert einige Umdrehungen der Kurbelwelle, bis eine Drehzahlreaktion feststellbar ist. Dies kann, wenn das Gemisch im Brennraum sehr mager ist und zur Feststellung des Betriebspunkts die zugeführte Kraftstoffmenge weiter verringert wird, dazu führen, dass der Motor ausgeht. Bei sehr magerem Gemisch besteht außerdem die Gefahr von Motorschäden insbesondere aufgrund unzureichender Schmierung.

Aufgabe der Erfindung ist es, ein Verfahren zum Betrieb eines Verbrennungsmotors anzugeben, mit dem ein gewünschter Betriebspunkt gut eingestellt werden kann.

Diese Aufgabe wird durch ein Verfahren mit den Merkmalen des Anspruchs 1 gelöst.

Es ist vorgesehen, dass zur Ermittlung der Lage des Betriebspunkts der Zündzeitpunkt verstellt wird. Die Verstellung des Zündzeitpunkts wirkt direkt und unmittelbar auf die Drehzahl des Verbrennungsmotors, so dass sich keine Verzögerung ergibt. Eine Verstellung des Zündzeitpunkts nach "früh" führt dabei zu einer Erhöhung der Motorleistung und damit auch der Drehzahl, wenn das Gemisch fett, die Luftzahl also kleiner als 1 ist. Ist das Gemisch mager, die Luftzahl also größer als 1, so sinkt die Leistung und die Drehzahl. Das Maximum der Leistungskurve kann dabei je nach Verbrennungsmotor bei einer Luftzahl liegen, die etwas kleiner als 1 ist.

Vorteilhaft wird der Zündzeitpunkt nach "früh" verstellt. Dadurch ergibt sich, wenn der Motor im fetten Bereich, also im Bereich des zweiten, abfallenden Asts betrieben wird, ein Leistungsanstieg und damit auch ein Drehzahlanstieg. Vorteilhaft wird der Zündzeitpunkt kontinuierlich verstellt. Dabei ist insbesondere vorgesehen, dass die Veränderung des Zündzeitpunkts über eine vorgegebene Zeitdauer erfolgt, die mehrere Umdrehungen der Kurbelwelle umfasst. Dadurch kann auch ein Betriebspunkt benachbart zum Maximum der Leistungskurve erkannt werden, bei dem die Drehzahl sich bei Änderung des Zündzeitpunkts zuerst in die eine und - nach Überschreitung des Maximums - in die andere Richtung ändert.

Vorteilhaft wird die zugeführte Kraftstoffmenge erhöht, wenn erkannt wird, dass der Betriebspunkt des Verbrennungsmotors auf dem ersten Ast liegt, der Motor also im mageren Bereich betrieben wird. Die zugeführte Kraftstoffmenge wird insbesondere verringert, wenn erkannt wird, dass der Betriebspunkt des Verbrennungsmotors auf dem zweiten Ast liegt. Es kann vorgesehen sein, dass der gewünschte Betriebspunkt im Bereich des Maximums der Leistungskurve liegt. Es kann jedoch auch vorgesehen sein, dass der Verbrennungsmotor im Bereich des zweiten Asts, also mit einer Leistung unterhalb des Maximums im fetten Bereich betrieben wird.

Durch die Änderung des Zündzeitpunkts ändert sich die Drehzahl des Verbrennungsmotors. Dies kann vom Benutzer wahrgenommen werden und als Fehlfunktion interpretiert werden. Es ist deshalb wünschenswert, die Drehzahländerung zu kompensieren, so dass sie vom Benutzer nicht wahrgenommen werden kann. Hierzu ist vorgesehen, dass bei der Ermittlung der Lage des Betriebspunkts neben dem Zündzeitpunkt auch die zugeführte Kraftstoffmenge geändert wird. Die Änderung der zugeführten Kraftstoffmenge ergibt ebenfalls eine Änderung der Drehzahl, die die Änderung der Drehzahl durch die Verstellung des Zündzeitpunkts kompensieren kann. Die Änderung der zugeführten Kraftstoffmenge wird vorteilhaft so gewählt, dass sich keine Änderung der Drehzahl des Verbrennungsmotors ergibt, wenn der Betriebspunkt dem gewünschten Betriebspunkt entspricht. Wie groß die Änderung der zugeführten Kraftstoffmenge dabei sein muss, ist für jeden Verbrennungsmotor individuell unterschiedlich und wird vorteilhaft experimentell ermittelt und in der Steuerung des Verbrennungsmotors hinterlegt. Nur wenn der Betriebspunkt des Verbrennungsmotors nicht dem gewünschten Betriebspunkt entspricht, ergibt sich eine Änderung der Drehzahl.

Der Verbrennungsmotor kann beispielsweise ein Werkzeug eines handgeführten Arbeitsgeräts antreiben. Das Werkzeug und weitere bewegte Teile erzeugen im Betrieb Massenträgheitskräfte, die die sich einstellende Drehzahl beeinflussen. Wird von der Steuerung eine Drehzahländerung ausgewertet, so muss diese Auswertung auf die Massenträgheitskräfte des Systems, also auf das Werkzeug und dgl., abgestimmt sein. Dadurch, dass beim vorgeschlagenen neuen Verfahren keine Drehzahländerung mehr erfolgen soll, ist das vorgeschlagene Verfahren weitgehend unabhängig von den Massenträgheitskräften des Systems und damit universell einsetzbar.

Es kann auch vorgesehen sein, dass die Verstellung des Zündzeitpunkts geregelt erfolgt. Dabei wird der Zündzeitpunkt so geregelt, dass sich im Wesentlichen keine Änderung der Drehzahl des Verbrennungsmotors ergibt, d. h., dass eine Drehzahländerung von weniger als 100 Umdrehungen pro Minute auftritt. Eine derartige Drehzahländerung liegt innerhalb der normalen Drehzahlschwankungen, die im Betrieb des Verbrennungsmotors systembedingt auftreten. Durch die vorgesehene Änderung der zugeführten Kraftstoffmenge ergibt sich eine erforderliche Änderung des Zündzeitpunkts, um die theoretische Drehzahländerung aufgrund der Änderung der zugeführten Kraftstoffmenge auszugleichen. Die Änderung des Zündzeitpunkts dient als Regelgröße.

Wird der Verbrennungsmotor im gewünschten Betriebspunkt betrieben, so ist die erforderliche Zündzeitpunktänderung zur Konstanthaltung der Drehzahl bekannt. Weicht die erforderliche Änderung des Zündzeitpunkts, um die Drehzahl konstant zu halten, hiervon ab, wird der Verbrennungsmotor nicht im gewünschten Betriebspunkt betrieben. Aus der zur Konstanthaltung der Drehzahl erforderlichen Änderung des Zündzeitpunkts kann damit der tatsächliche Betriebspunkt ermittelt werden.

Vorteilhaft wird die zugeführte Kraftstoffmenge verringert und der Zündzeitpunkt nach "spät" verstellt. Es kann jedoch auch vorgesehen sein, dass die zugeführte Kraftstoffmenge erhöht und der Zündzeitpunkt nach "früh" verstellt wird. Insbesondere bei Zweitaktmotoren, bei denen die Kraftstoffzufuhr in den Ansaugkanal oder ins Kurbelgehäuse erfolgt, gelangt die geänderte Kraftstoffmenge erst nach einigen Umdrehungen der Kurbelwelle in den Brennraum und es ergibt sich auch erst einige Umdrehungen der Kurbelwelle nach Änderung der zugeführten Kraftstoffmenge eine Änderung der Drehzahl. Deshalb ist vorgesehen, dass zuerst die zugeführte Kraftstoffmenge geändert und erst eine vorgegebene Anzahl von Umdrehungen der Kurbelwelle später der Zündzeitpunkt geändert wird. Die vorgegebene Anzahl von Umdrehungen der Kurbelwelle entspricht dabei der Zeit, die der Kraftstoff braucht, bis er in den Brennraum gelangt. Auch diese Zeitdauer wird vorteilhaft experimentell bestimmt und in der Steuerung gespeichert. Bei der Zufuhr von Kraftstoff in einen Überströmkanal oder auch bei der Zufuhr von Kraftstoff ins Kurbelgehäuse kann der Kraftstoff zyklusgenau oder mit nur sehr geringer Verzögerung in den Brennraum gelangen, so dass eine Änderung der zugeführten Kraftstoffmenge sofort zu einer Drehzahländerung führt und deshalb gleichzeitig mit Änderung der zugeführten Kraftstoffmenge eine Änderung des Zündzeitpunkts erfolgt.

Das Verfahren wird insbesondere bei Volllast des Verbrennungsmotors durchgeführt. Vorteilhaft wird der Kraftstoff über ein Dosierventil zugeführt. Dadurch kann die zugeführte Kraftstoffmenge einfach und genau dosiert geändert werden. Der Kraftstoff kann dabei über einen Vergaser zugeführt werden, es kann jedoch auch vorgesehen sein, dass der Kraftstoff direkt ins Kurbelgehäuse zugeführt wird. Auch ein Kraftstoffventil, das Kraftstoff in den Ansaugkanal und/oder in einen Überströmkanal zuführt, kann zweckmäßig sein.

Ein Ausführungsbeispiel der Erfindung wird im Folgenden anhand der Zeichnungen erläutert. Es zeigen:
- Fig. 1: eine schematische Darstellung eines Verbrennungsmotors,
- Fig. 2: Leistungskurven, die den Zusammenhang von Leistung und Luftzahl für verschiedene Zündzeitpunkte angeben,
- Fig. 3: ein exemplarischer Verlauf des Zündzeitpunkts,
- Fig. 4 bis Fig. 6: mögliche Drehzahlverläufe bei dem Zündzeitpunktverlauf aus Fig. 3 über der Zeit,
- Fig. 7: einen möglichen Verlauf der zugeführten Kraftstoffmenge,
- Fig. 8: den Verlauf des Zündzeitpunkts zur Kompensation der Dreh- zahländerung durch den Kraftstoffverlauf aus Fig. 7,
- Fig. 9 und Fig. 10: mögliche sich ergebende Drehzahlverläufe über der Zeit,
- Fig. 11: einen möglichen Verlauf der zugeführten Kraftstoffmenge,
- Fig. 12: mögliche Verläufe des Zündzeitpunkts zur Kompensation der Drehzahländerung durch den Kraftstoffverlauf aus Fig. 11,
- Fig. 13: den Drehzahlverlauf über der Zeit,
- Fig. 14 bis Fig. 16: Ablaufdiagramme für Ausführungsbeispiele des Verfahrens.

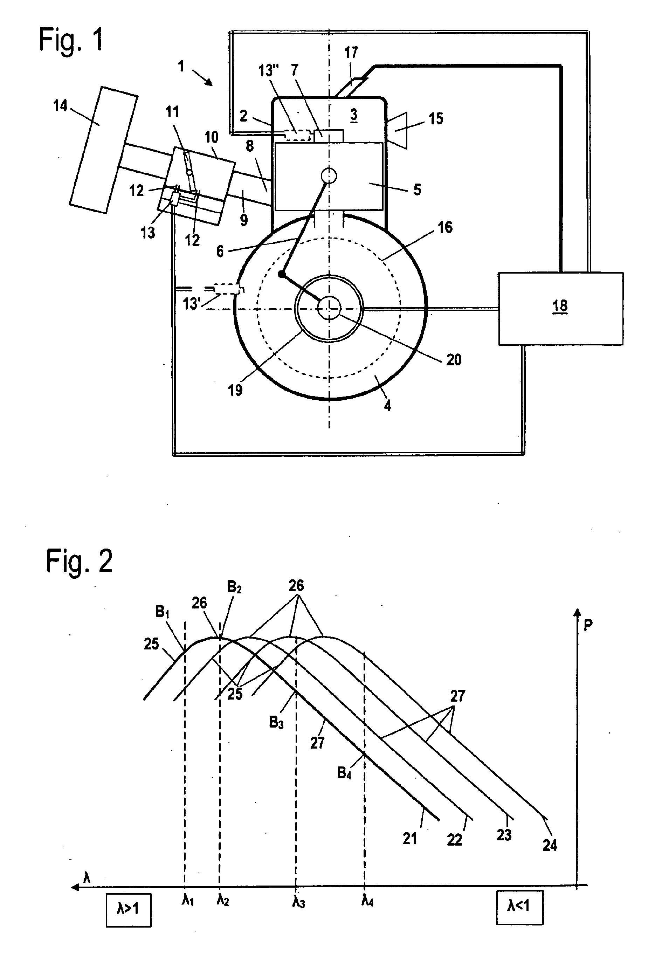

In Fig. 1 ist schematisch ein Verbrennungsmotor 1 gezeigt, der als Einzylinder-Zweitaktmotor ausgebildet ist. Der Verbrennungsmotor 1 ist vorteilhaft der Antriebsmotor in einem handgeführten Arbeitsgerät wie einer Motorsäge, einem Trennschleifer, einem Freischneider, einem Rasenmäher oder dgl.. Der Verbrennungsmotor 1 besitzt einen Zylinder 2, in dem ein Brennraum 3 ausgebildet ist. Der Brennraum 3 ist von einem im Zylinder 2 hin- und hergehend gelagerten Kolben 5 begrenzt, der über ein Pleuel 6 eine in einem Kurbelgehäuse 4 drehbar gelagerte Kurbelwelle 20 antreibt. Zur Zufuhr von Verbrennungsluft besitzt der Verbrennungsmotor 1 einen Ansaugkanal 9, der mit einem Einlass 8 am Zylinder 2 ins Kurbelgehäuse 4 mündet. Der Einlass 8 ist vom Kolben 5 schlitzgesteuert. Im Ansaugkanal 9 ist ein Vergaser 10 angeordnet, in dem eine Drosselklappe 11 schwenkbar gelagert ist. Der Ansaugkanal 9 ist mit einem Luftfilter 14 verbunden, über den die Verbrennungsluft angesaugt wird. Im Vergaser 10 münden mehrere Kraftstofföffnungen 12, zu denen Kraftstoff über ein Dosierventil 13 zugeführt wird. Das Dosierventil 13 ist von einer Steuerung 18 gesteuert, die die zugeführte Kraftstoffmenge bestimmt. Das Dosierventil 13 kann beispielsweise ein elektromagnetisches Ventil sein.

Verbrennungsluft und Kraftstoff werden beim Aufwärtshub des Kolbens 5 ins Kurbelgehäuse 4 angesaugt und treten beim Abwärtshub des Kolbens 5 über mindestens einen Überströmkanal 7, der das Kurbelgehäuse 4 im Bereich des unteren Totpunkts des Kolbens 5 mit dem Brennraum 3 verbindet, in den Brennraum 3 über. In den Brennraum 3 ragt eine Zündkerze 17, die ebenfalls von der Steuerung 18 gesteuert ist und die über die Steuerung 18 auch mit Energie versorgt wird. An der Kurbelwelle 20 ist ein Generator 19 angeordnet, der ebenfalls mit der Steuerung 18 verbunden ist und der die Energie für die Zündung bereitstellt und ein Drehzahlsignal liefert. Stattdessen kann auch eine übliche Zündspule vorgesehen sein. Der Generator 19 und die Zündkerze 17 bilden mit dem Teil der Steuerung 18, der die Zündung steuert, eine Zündeinrichtung. Im Bereich des oberen Totpunkts des Kolbens 5 wird das Kraftstoff/Luft-Gemisch im Brennraum 3 gezündet. Dadurch wird der Kolben 5 in Richtung auf das Kurbelgehäuse 4 beschleunigt. Aus dem Brennraum 3 führt ein Auslass 15, durch den die Abgase den Brennraum 3 verlassen. An der Kurbelwelle 20 ist außerdem noch ein Lüfterrad 16 angeordnet, das zur Förderung von Kühlluft für den Verbrennungsmotor 1 dient.

Anstatt des Dosierventils 13 am Vergaser 10 kann auch ein Dosierventil 13' vorgesehen sein, das den Kraftstoff direkt ins Kurbelgehäuse 4 zuführt. Es kann auch ein Dosierventil 13" vorgesehen sein, das den Kraftstoff in einen Überströmkanal 7 zuführt. Es kann auch ein Dosierventil vorgesehen sein, das Kraftstoff direkt in den Brennraum 3 zuführt.

Im Betrieb des Verbrennungsmotors 1 steuert die Steuerung 18 die über das Dosierventil 13 zugeführte Kraftstoffmenge und den Zündzeitpunkt, zu dem die Zündkerze 17 das Gemisch im Brennraum 3 zündet. Zweitaktmotoren werden üblicherweise im fetten Bereich betrieben, das heißt die Luftzahl λ, die das Verhältnis der für die Verbrennung tatsächlich zur Verfügung stehende Luftmasse bezogen auf die mindestens notwendige stöchiometrische Luftmasse angibt, ist kleiner als 1, beispielsweise etwa 0,85. Dies gilt auch für fremdgezündete Viertaktmotoren. Zur Regelung der zuzuführenden Kraftstoffmenge kann bei Motoren, bei denen keine Lambda-Sonde zur Verfügung steht, die in Fig. 2 gezeigte Leistungskurve herangezogen werden. Die Leistungskurve gibt den Zusammenhang von Motorleistung P und der Luftzahl λ an. In der Darstellung in Fig. 2 sind dabei Lambda-Werte größer als 1, die ein mageres Gemisch bezeichnen, links aufgetragen und Lambda-Werte kleiner als 1, die ein fettes Gemisch bezeichnen, rechts. Wie die Leistungskurve 21 zeigt, steigt die Leistung P beim Anfetten des Gemischs aus dem mageren Bereich zunächst entlang eines ersten, ansteigenden Asts 25 bis auf ein Maximum 26 an. Bei weiterem Anfetten sinkt die Leistung P entsprechend eines zweiten Asts 27 wieder ab.

Die weiteren in Fig. 2 gezeigten Leistungskurven 22, 23 und 24 zeigen den gleichen Verlauf der Motorleistung P bei anderen Zündzeitpunkten. Von der Leistungskurve 21 zur Leistungskurve 24 über die Leistungskurven 22 und 23 wird der Zündzeitpunkt ZZP nach "früh" verstellt.

In Fig. 2 sind exemplarisch vier Betriebspunkte B₁, B₂, B₃ und B₄ auf der Leistungskurve 21 gezeigt, die unterschiedlichen Luftzahlen λ₁, λ₂, λ₃ und λ₄ zugeordnet sind.

Je nach Verbrennungsmotor 1 kann ein gewünschter Betriebspunkt beispielsweise der Betriebspunkt B₂ im Maximum 26 oder der Betriebspunkt B₃ auf dem zweiten Ast 27 sein. Auch andere gewünschte Betriebspunkte, die auf dem zweiten Ast 27 liegen, können vorgesehen sein. Ein Betrieb auf dem ersten Ast 25 ist dagegen üblicherweise unerwünscht, da ein Abmagern in diesem Bereich schnell zum Absterben des Motors führen kann und bei sehr magerem Gemisch oft keine ausreichende Kühlung und/oder Schmierung des Verbrennungsmotors 1 erzielt wird. Um einen gewünschten Betriebspunkt einstellen zu können, muss der momentane Betriebspunkt ermittelt werden. Dabei muss insbesondere festgestellt werden, ob der Betriebspunkt auf dem ersten Ast 25 oder auf dem zweiten Ast 27 liegt, da zur Erzielung einer gewünschten Leistung P oder einer gewünschten Drehzahl n im einen Fall angefettet und im anderen Fall abgemagert werden muss.

Um festzustellen, auf welchem Ast 25, 27 der momentane Betriebspunkt liegt, ist vorgesehen, den Zündzeitpunkt ZZP zu verändern. Liegt der aktuelle Betriebspunkt auf dem ersten Ast 25 oder im Maximum 26, wie durch die Betriebspunkte B₁ und B₃ exemplarisch dargestellt ist, so führt eine Verstellung des Zündzeitpunkts ZZP nach "früh" dazu, dass die Leistung P und damit auch die Drehzahl n des Verbrennungsmotors 1 absinkt, und zwar bei Verstellung des Zündzeitpunkts ZZP vom Zündzeitpunkt der Leistungskurve 21 auf den Zündzeitpunkt der Leistungskurve 22 auf den durch die Leistungskurve 22 bei der jeweiligen Luftzahl λ₁ beziehungsweise λ₂ definierten Wert. Da die Verstellung des Zündzeitpunkts ZZP sehr schnell erfolgt, wird angenommen, dass die Betriebsbedingungen konstant bleiben, die Leistung P also proportional zur Drehzahl n des Verbrennungsmotors 1 ist. Beim Verstellen des Zündzeitpunkts nach "früh" ergibt sich demnach entsprechend zum Leistungsabfall ein Drehzahlabfall, wenn der Verbrennungsmotor 1 im Betriebspunkt B₁ oder im Betriebspunkt B₂ betrieben wird.

Im Betriebspunkt B₃, der im Ausführungsbeispiel dem gewünschten Betriebspunkt entspricht, steigt die Leistung bei Verstellung des Zündzeitpunkts ZZP nach "früh" zunächst an, wie durch die Leistungskurven 22 und 23 definiert ist. Anschließend sinkt die Leistung P und damit auch die Drehzahl n auf den durch den ersten Ast 25 der Leistungskurve 24 definierten Wert bei der Luftzahl λ₃. Im Betriebspunkt B₄ ergibt sich dagegen bei Verstellung des Zündzeitpunkts ZZP nach "früh" ein Leistungsanstieg und damit auch ein An steigen der Drehzahl n, wie durch die Leitungskurven 22 bis 24 bei der Luftzahl λ₄ definiert ist. Daraus, ob die Drehzahl n abfällt, ansteigt oder zunächst ansteigt und dann abfällt, kann demnach der Betriebspunkt des Verbrennungsmotors 1 ermittelt werden.

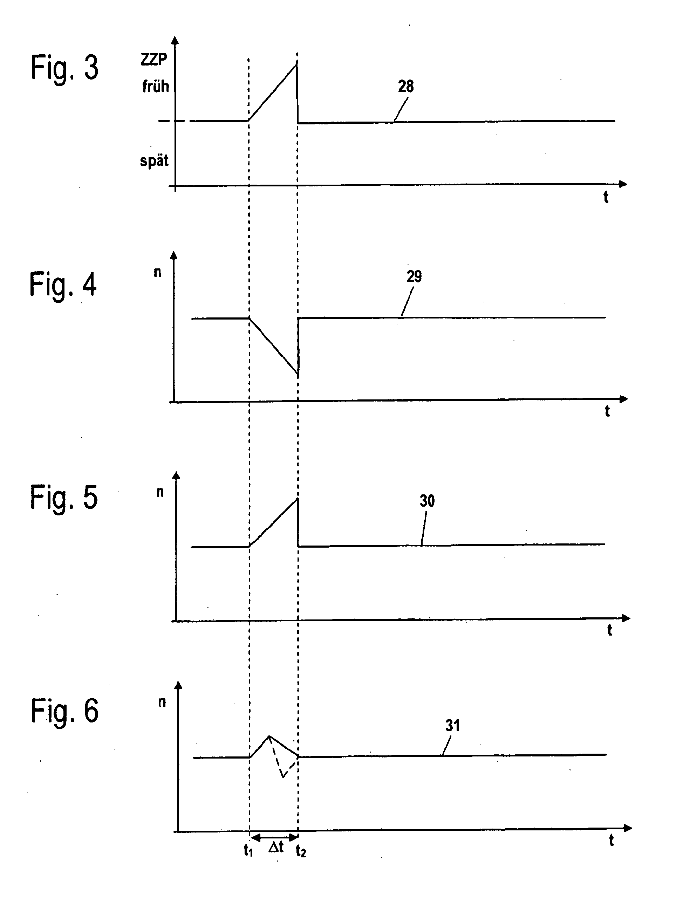

Die unterschiedlichen Drehzahlreaktionen sind in den Fig. 4 bis 6 für einen Verlauf des Zündzeitpunkts ZZP wie in Fig. 3 gezeigt dargestellt. Fig. 3 zeigt eine Zündzeitpunktkurve 28, die den Verlauf des Zündzeitpunkts ZZP über der Zeit t angibt und bei der der Zündzeitpunkt ZZP für eine Zeitspanne Δt vom Zeitpunkt t₁ bis zum Zeitpunkt t₂ nach "früh" verstellt wird. Wird der Verbrennungsmotor 1 im Betriebspunkt B₁ oder im Betriebspunkt B₂ betrieben, so sinkt die Drehzahl n entsprechend der Drehzahlkurve 29 in Fig. 4 ab. Beim Betrieb des Verbrennungsmotors 1 im Betriebspunkt B₄ steigt die Drehzahl n dagegen entsprechend der Drehzahlkurve 30 in Fig. 5 kontinuierlich an. Wird der Verbrennungsmotor 1 im Betriebspunkt B₃ betrieben, so steigt die Drehzahl n entsprechend der Drehzahlkurve 31 in Fig. 6 zunächst an und sinkt anschließend wieder ab. Vorteilhaft sinkt die Drehzahl n dabei nicht unter den Ausgangswert ab, wie durch die durchgezogene Linie gezeigt ist. Es kann sich jedoch auch ein Absinken der Drehzahl n unter den Ausgangswert ergeben. Dies ist in Fig. 6 durch den gestrichelt gezeichneten Kurvenverlauf angedeutet.

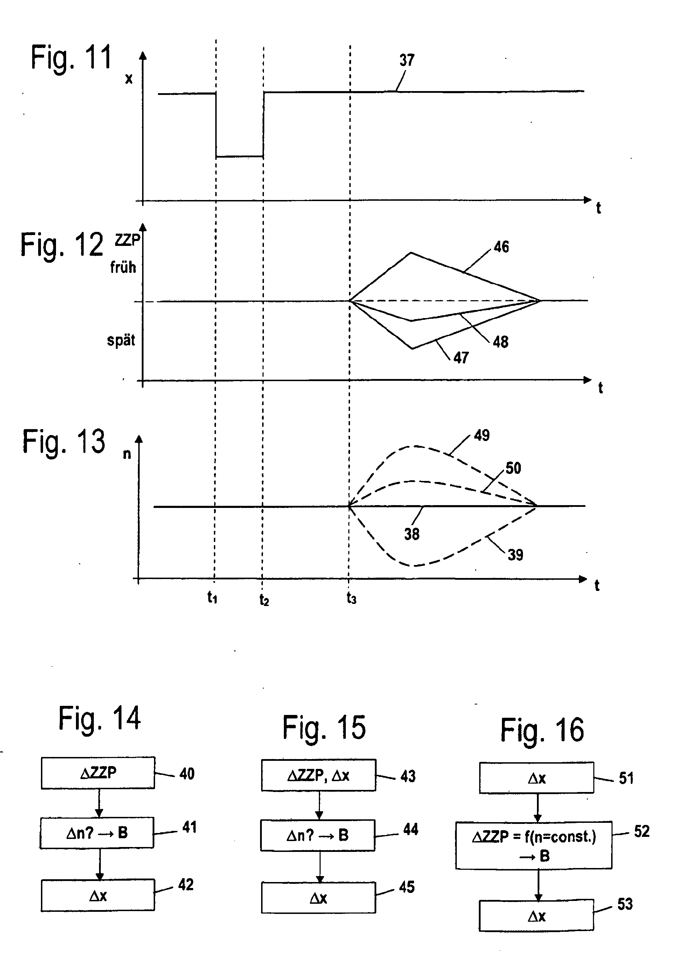

Fig. 14 zeigt den Ablauf des erfindungsgemäßen Verfahrens. Im Verfahrensschritt 40 wird der Zündzeitpunkt ZZP kontinuierlich geändert. Auch eine sprunghafte Änderung des Zündzeitpunkts ZZP ist möglich. Im Verfahrensschritt 41 wird die Drehzahlreaktion, die in den Figuren 4 bis 6 gezeigt ist, also der Verlauf der Drehzahl n über der Zeit t, gemessen und ausgewertet. Der Drehzahlverlauf kann beispielsweise aus dem Signal des Generators 19 von der Steuerung 18 ausgewertet werden. Aus dem gemessenen Drehzahlverlauf wird der Betriebspunkt B ermittelt. In Abhängigkeit des ermittelten Betriebspunkts wird im Verfahrensschritt 42 die zugeführte Kraftstoffmenge x geändert, wenn der ermittelte Betriebspunkt vom gewünschten Betriebspunkt abweicht. Dabei wird die zugeführte Kraftstoffinenge erhöht, wenn der ermittelte Betriebspunkt in der Darstellung in Fig. 2 links vom gewünschten Betriebspunkt liegt, das Gemisch also zu mager ist, und abgemagert, wenn der ermittelte Betriebspunkt rechts von dem gewünschten Betriebspunkt in Fig. 2 liegt, das Gemisch also zu fett ist.

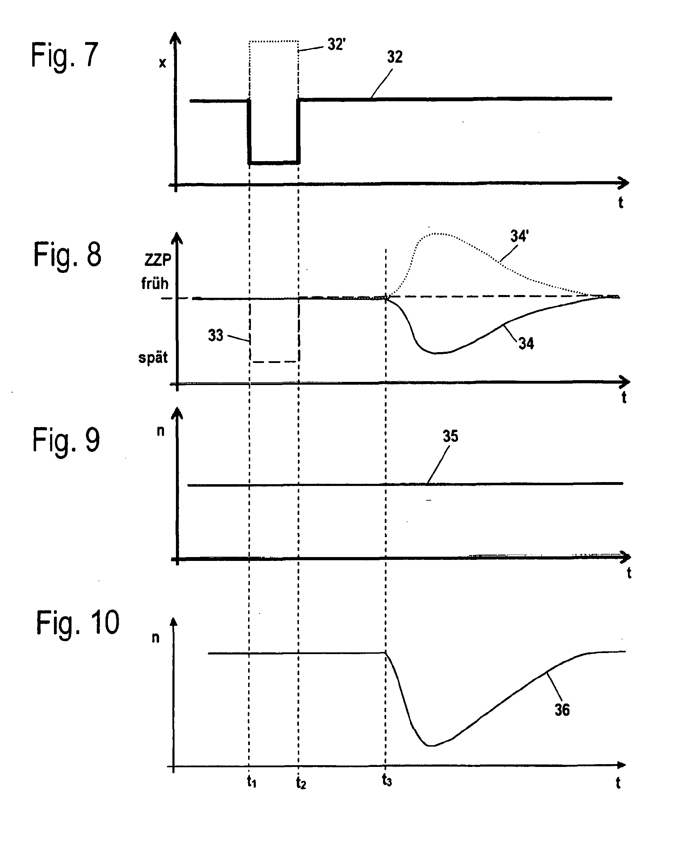

Durch die Verstellung des Zündzeitpunkts ZZP ergibt sich eine Änderung der Drehzahl n, die vom Bediener wahrgenommen und als störend empfunden werden kann. Der Benutzer wird eine Drehzahländerung Δn nicht mehr wahrnehmen, wenn diese unter 100 Umdrehungen pro Minute liegt, da derartige Drehzahländerungen im normalen Betrieb des Verbrennungsmotors systembedingt auftreten. Um diese geringe Drehzahlschwankung zu erreichen ist vorgesehen, eine erwartete Änderung der Drehzahl n zu kompensieren, und zwar dadurch, dass die zugeführte Kraftstoffinenge x bei der Ermittlung des Betriebspunkts entsprechend geändert wird. Dies ist in den Figuren 7 bis 10 gezeigt. Fig. 8 zeigt die vorgesehene, theoretische sprunghafte Verstellung des Zündzeitpunkts ZZP nach "spät" als Zündzeitpunktkurve 33. Im Ausführungsbeispiel liegt der gewünschte Betriebspunkt im Betriebspunkt B₃ in Fig. 2. Bei einer Verstellung des Zündzeitpunkts ZZP nach "spät" ist demnach zu erwarten, dass die Drehzahl n abfällt, beispielsweise, wenn der Zündzeitpunkt ZZP von dem der Leistungskurve 23 auf den der Leistungskurve 21 zugeordneten Zündzeitpunkt ZZP verstellt wird.

Um den erwarteten Drehzahlabfall auszugleichen, ist vorgesehen, die zugeführte Kraftstoffmenge x wie in Fig. 7 durch die Kurve 32 gezeigt zu verringern. Die Verringerung der Kraftstoffmenge x soll ebenfalls sprunghaft erfolgen. Die verringerte Kraftstoffmenge wird vom Zeitpunkt t₁ bis zum Zeitpunkt t₂ zugeführt. Bei der Änderung der zugeführten Kraftstoffmenge x durch geänderte Ansteuerung des Dosierventils 13 dauert es einige Umdrehungen der Kurbelwelle 20, bis tatsächlich ein abgemagertes Gemisch im Brennraum 3 ankommt. Die Verstellung des Zündzeitpunkts ZZP wirkt jedoch sofort auf die Drehzahl n. Um zu erreichen, dass die Drehzahländerungen durch die geänderte zugeführte Kraftstoffmenge x und die Verstellung des Zündzeitpunkts ZZP gleichzeitig wirken, ist deshalb für die Änderung des Zündzeitpunkts der durch die Zündzeitpunktkurve 34 in Fig. 8 gezeigte tatsächliche verzögerte Verlauf vorgesehen. Der Zündzeitpunkt ZZP wird zu einem Zeitpunkt t₃ verstellt, der später als der Zeitpunkt t₂ ist. Die tatsächliche Verstellung des Zündzeitpunkts ZZP erfolgt nicht sprunghaft, sondern anhand einer Kurve allmählich. Bei der Zufuhr von Kraftstoff über das Dosierventil 13' ins Kurbelgehäuse oder bei einer Kraftstoffzufuhr direkt in einen Überströmkanal kann sich eine Änderung der zugeführten Kraftstoffmenge x auch ohne Verzögerung auswirken, so dass auch die Änderung des Zündzeitpunkts ZZP ohne Verzögerung und sprunghaft erfolgen kann.

Liegt der Betriebspunkt des Motors im Betriebspunkt B₃, so ergibt sich, wie in Fig. 9 durch die Drehzahlkurve 35 gezeigt, keine Änderung der Drehzahl. Dadurch kann auf einfache Weise und ohne Drehzahleinfluss ermittelt werden, ob der Verbrennungsmotor 1 im Betriebspunkt B₃ betrieben wird. Liegt der Betriebspunkt des Motors jedoch auf dem ersten Ast 25, so ergibt sich durch die Verstellung des Zündzeitpunkts gemäß der Zündzeitpunktkurve 34 in Fig. 8 nach "spät" eine Erhöhung der Drehzahl n. Durch die außerdem erfolgende Reduzierung der zugeführten Kraftstoffmenge x gemäß Fig. 7 wird die Drehzahl n sehr deutlich erhöht, und es ergibt sich der von der Drehzahlkurve 36 gezeigte Drehzahlverlauf.

Anstatt einer Verringerung der Kraftstoffmenge x und einer Verstellung des Zündzeitpunkts nach "spät" kann auch vorgesehen sein, die Kraftstoffmenge gemäß einer in Fig. 7 gestrichelt eingezeichneten Kurve 32' zu erhöhen. Zur Kompensation der Drehzahländerung durch die erhöhte Kraftstoffmenge x wird der Zündzeitpunkt wie in Fig. 8 gezeigt, gemäß einer Kurve 34' nach "früh" verstellt.

Anstatt die Verstellung des Zündzeitpunkts für den gewünschten Betriebspunkt einzustellen kann es auch vorgesehen sein, die Änderung des Zündzeitpunkts zu regeln, so dass sich keine spürbare Drehzahländerung ergibt. Dies ist in den Figuren 11 bis 13 schematisch gezeigt. Die zugeführte Kraftstoffmenge x wird gemäß einer Kurve 37 vom Zeitpunkt t₁ bis zum Zeitpunkt t₂ verringert. Die Verringerung der zugeführten Kraftstoff menge x kann bei der Zufuhr von Kraftstoff über ein getaktetes Dosierventil 13 oder 13' durch Erhöhung des Tastverhältnisses, also dadurch, dass das Dosierventil 13, 13' insgesamt länger geschlossen gehalten wird, erfolgen. Durch die verringerte Kraftstoffmenge setzt zum Zeitpunkt t₃ eine Änderung der Drehzahl n ein. Dieser sehr kleinen Änderung der Drehzahl n wirkt der Regler in der Steuerung 18 durch entsprechende Verstellung des Zündzeitpunkts ZZP entgegen, so dass die Drehzahl n höchstens bis auf durch den Bediener nicht feststellbare minimale Drehzahlschwankungen konstant bleibt. Der konstante Verlauf der Drehzahl n ist in Fig. 13 durch eine Kurve 38 verdeutlicht.

Arbeitet der Verbrennungsmotor 1 auf dem ansteigenden Ast, beispielsweise im Betriebspunkt B₁ (Fig. 2), würde sich durch die in Fig. 11 gezeigte Verringerung der Kraftstoffmenge x der von der Kurve 39 in Fig. 13 gezeigte Drehzahlverlauf ergeben. Die Drehzahl würde abfallen. Dies kann durch eine Verstellung des Zündzeitpunkts nach "früh" wie durch die Zündzeitpunktkurve 46 in Fig. 12 schematisch gezeigt ist, kompensiert werden. In Fig. 12 besitzt die Zündzeitpunktkurve 46 einen rampenförmigen Verlauf. Die Zündzeitpunktkurve 46 kann jedoch auch kurvenförmig gerundet verlaufen.

Liegt der Betriebspunkt des Verbrennungsmotors 1 auf dem zweiten, absteigenden Ast 27, beispielsweise im Betriebspunkt B₄, würde sich ohne Änderung des Zündzeitpunkts ZZP bei Verringerung der zugeführten Kraftstoffmenge x die in Fig. 13 von der Drehzahlkurve 49 gezeigte Drehzahlerhöhung ergeben. Diese Drehzahlerhöhung kann durch eine Verstellung des Zündzeitpunkts nach "spät" wie durch die Zündzeitpunktkurve 47 in Fig. 12 angedeutet kompensiert werden. Entsprechend wird die durch die Drehzahlkurve 50 in Fig. 13 gezeigte Drehzahlerhöhung durch eine Zündzeitpunktverstellung nach "spät" entsprechend der Zündzeitpunktkurve 48 kompensiert.

Durch die Regelung der Zündzeitpunktverstellung kann unabhängig vom Betriebspunkt B des Verbrennungsmotors 1 erreicht werden, dass sich trotz der Veränderung der zugeführten Kraftstoffmenge x keine vom Benutzer feststellbaren Schwankungen der Drehzahl n ergeben. Der Zündzeitpunkt ZZP wird so geregelt, dass die Drehzahl n konstant bleibt.

Fig. 15 zeigt den Ablauf des Verfahrens zur Steuerung des Verbrennungsmotors 1. Im Verfahrensschritt 43 werden der Zündzeitpunkt ZZP und die zugeführte Kraftstoffmenge x geändert, und zwar so, dass sich die Drehzahlbeeinflussung aufhebt, wenn der Motor im gewünschten Betriebspunkt betrieben wird. Dabei wird vorteilhaft der Zündzeitpunkt nach "spät" verstellt, und die zugeführte Kraftstoffmenge x wird reduziert. Im Verfahrensschritt 44 wird ermittelt, ob sich die Drehzahl n ändert und aus der eventuell erfolgenden oder nicht erfolgenden Drehzahländerung wird der Betriebspunkt des Verbrennungsmotors 1 ermittelt. Liegt der Betriebspunkt B nicht im gewünschten Betriebspunkt, so wird die zugeführte Kraftstoffmenge x im Verfahrensschritt 45 geändert, bis der Betriebspunkt des Verbrennungsmotors im gewünschten Betriebspunkt liegt.

Stattdessen kann die Verstellung des Zündzeitpunkts ZZP auch geregelt so erfolgen, dass sich keine Drehzahländerung ergibt. Dies ist in Fig. 16 verdeutlicht. Im Verfahrensschritt 51 wird die zugeführte Kraftstoffmenge x geändert. Im Verfahrensschritt 52 wird die sich daraus bei konstanter Drehzahl n ergebende Änderung des Zündzeitpunkts ΔZZP ausgewertet. Die Ermittlung des Betriebspunkts des Verbrennungsmotors 1 erfolgt anhand des Verlaufs des Zündzeitpunkts ZZP. Liegt der Betriebspunkt nicht im gewünschten Betriebspunkt, so wird die zugeführte Kraftstoffmenge x im Verfahrensschritt 53 geändert, bis der Betriebspunkt des Verbrennungsmotors im gewünschten Betriebspunkt liegt.

Um einen gewünschten Betriebspunkt einzustellen, kann es zweckmäßig sein, zunächst das Maximum 26 einer Leistungskurve 21, 22, 23, 24 als Betriebspunkt einzustellen und ausgehend von dem Maximum 26 die zugeführte Kraftstoffmenge x um einen vorgegebenen Wert zu erhöhen, um einen gewünschten Betriebspunkt B auf dem zweiten Ast 27 zu erreichen. Es kann jedoch auch vorgesehen sein, aus der Drehzahlreaktion oder dem Verlauf des Zündzeitpunkts ZZP bei konstanter Drehzahl n direkt auf die Lage des momentanen Betriebspunkts zu schließen und ausgehend vom momentanen Betriebspunkt durch Änderung der zugeführten Kraftstoffmenge x den gewünschten Betriebspunkt einzustellen.

## Patentansprüche

1. Verfahren zum Betrieb eines Verbrennungsmotors, wobei der Verbrennungsmotor (1) einen Brennraum (3) besitzt, der von einem Kolben (5) begrenzt ist, wobei der Kolben (5) eine in einem Kurbelgehäuse (4) drehbar gelagerte Kurbelwelle (20) antreibt, wobei der Verbrennungsmotor (1) eine Einrichtung zur Zufuhr von Kraftstoff, eine Zündeinrichtung und eine Steuerung (18) umfasst, wobei der Zusammenhang zwischen der Leistung (P) des Verbrennungsmotors (1) und der Luftzahl (λ) im Brennraum (3) durch eine Leistungskurve (21, 22, 23, 24) angegeben ist, die einen ersten, ansteigenden Ast (25), ein Maximum (26) und einen zweiten, abfallenden Ast (27) in dessen Bereich die Luftzahl (λ) kleiner als 1 ist, besitzt, wobei das Verfahren die folgenden Schritte umfasst:
- Ermittlung der Lage des Betriebspunkts (B₁, B₂, B₃, B₄) des Verbrennungsmotors (1) **auf der Leistungskurve (21, 22, 23, 24),** wobei zur Ermittlung der Lage des Betriebspunkts (B₁, B₂, B₃, B₄) der Zündzeitpunkt (ZZP) **in einem ersten Verfahrensschritt (40, 43, 51)** verstellt und die Drehzahlreaktion des Verbrennungsmotors (1) bei verstelltem Zündzeitpunkt (ZZP) **in einem zweiten Verfahrensschritt (41, 44, 52)** ausgewertet wird;
- Änderung der zugeführten Kraftstoffmenge (x) in Abhängigkeit des ermittelten Betriebspunkts (B₁, B₂, B₃, B₄) **in einem dritten Verfahrensschritt (42, 45, 53),** wenn der ermittelte Betriebspunkt (B₁, B₂, B₃, B₄), nicht der gewünschte Betriebspunkt (B₁, B₂, B₃, B₄) ist.

2. Verfahren nach Anspruch 1,
**dadurch gekennzeichnet, dass** der Zündzeitpunkt (ZZP) **im ersten Verfahrensschritt (40)** nach "früh" verstellt wird.

3. Verfahren nach Anspruch 1 oder 2,
**dadurch gekennzeichnet, dass** der Zündzeitpunkt (ZZP) **im ersten Verfahrensschritt (40, 43)** kontinuierlich verstellt wird.

4. Verfahren nach einem der Ansprüche 1 bis 3,
**dadurch gekennzeichnet, dass** die Veränderung des Zündzeitpunkts (ZZP) **im ersten Verfahrensschritt (40)** über eine vorgegebene Zeitdauer (Δt) erfolgt, die mehrere Umdrehungen der Kurbelwelle (20) umfasst.

5. Verfahren nach einem der Ansprüche 1 bis 4,
**dadurch gekennzeichnet, dass** die zugeführte Kraftstoffmenge (x) **im dritten Verfahrensschritt (42, 45, 53)** erhöht wird, wenn erkannt wird, dass der Betriebspunkt (B₁) des Verbrennungsmotors (1) auf dem ersten Ast (25) liegt.

6. Verfahren nach einem der Ansprüche 1 bis 5,
**dadurch gekennzeichnet, dass** die zugeführte Kraftstoffmenge (x) **im dritten Verfahrensschritt (42, 45, 53)** verringert wird, wenn erkannt wird, dass der Betriebspunkt (B₃, B₄) des Verbrennungsmotors (1) auf dem zweiten Ast (27) liegt.

7. Verfahren nach einem der Ansprüche 1 bis 6,
**dadurch gekennzeichnet, dass** bei der Ermittlung der Lage des Betriebspunkts (B₁, B₂, B₃, B₄) **im ersten Verfahrensschritt (43, 51)** neben dem Zündzeitpunkt (ZZP) auch die zugeführte Kraftstoffmenge (x) geändert wird.

8. Verfahren nach Anspruch 7,
**dadurch gekennzeichnet, dass** die Änderung der zugeführten Kraftstoffmenge (x) **im ersten Verfahrensschritt (43)** so gewählt wird, dass sich keine Änderung der Drehzahl (n) des Verbrennungsmotors (1) ergibt, wenn der Betriebspunkt (B₁, B₂, B₃, B₄) des Verbrennungsmotors (1) dem gewünschten Betriebspunkt (B₁, B₂, B₃, B₄) entspricht.

9. Verfahren nach Anspruch 7,
**dadurch gekennzeichnet, dass** die Verstellung des Zündzeitpunkts (ZZP) **im ersten Verfahrensschritt (52)** geregelt erfolgt, wobei der Zündzeitpunkt (ZZP) so geregelt wird, dass eine **Drehzahländerung von weniger als 100 Umdrehungen pro Minute auftritt.**

10. Verfahren nach einem der Ansprüche 7 bis 9,
**dadurch gekennzeichnet, dass** die zugeführte Kraftstoffmenge (x) **im ersten Verfahrensschritt (43)** verringert und der Zündzeitpunkt (ZZP) nach "spät" verstellt wird.

11. Verfahren nach einem der Ansprüche 7 bis 9,
**dadurch gekennzeichnet, dass** die zugeführte Kraftstoffmenge (x) **im ersten Verfahrensschritt** erhöht und der Zündzeitpunkt (ZZP) nach "früh" verstellt wird.

12. Verfahren nach einem der Ansprüche 7 bis 11,
**dadurch gekennzeichnet, dass im ersten Verfahrensschritt (43)** zuerst die zugeführte Kraftstoffmenge (x) geändert wird und eine vorgegebene Anzahl von Umdrehungen der Kurbelwelle (20) später der Zündzeitpunkt (ZZP) geändert wird.

13. Verfahren nach einem der Ansprüche 1 bis 12,
**dadurch gekennzeichnet, dass** das Verfahren bei Volllast des Verbrennungsmotors (1) durchgeführt wird.

14. Verfahren nach einem der Ansprüche 1 bis 13,
**dadurch gekennzeichnet, dass** der Kraftstoff über ein Dosierventil (13, 13') zugeführt wird.

15. Verfahren nach einem der Ansprüche 1 bis 14,
**dadurch gekennzeichnet, dass** der Kraftstoff über einen Vergaser (10) zugeführt wird.

16. Verfahren nach einem der Ansprüche 1 bis 15,
**dadurch gekennzeichnet, dass** der Kraftstoff direkt ins Kurbelgehäuse (4) zugeführt wird.

17. Verfahren nach einem der Ansprüche 1 bis 15,
**dadurch gekennzeichnet, dass** der Verbrennungsmotor (1) einen Ansaugkanal (9) besitzt, und dass der Kraftstoff in den Ansaugkanal (9) zugeführt wird.

18. Verfahren nach einem der Ansprüche 1 bis 15,
**dadurch gekennzeichnet, dass** der Verbrennungsmotor (1) mindestens einen Überströmkanal (7) besitzt, und dass der Kraftstoff in den Überströmkanal (7) zugeführt wird.

## Claims

1. Method for operating an internal combustion engine, wherein the internal combustion engine (1) comprises a combustion chamber (2) bounded by a piston (5), wherein the piston (5) drives a crankshaft (20) rotatably mounted in a crankcase (4), wherein the internal combustion engine (1) includes a device for the supply of fuel, an ignition device and a control unit (8), wherein the relationship between the power (P) of the internal combustion engine (1) and the air ratio (λ) in the combustion chamber (3) is specified by a power curve (21, 22, 23, 24) having a first, positive-going branch (25), a maximum (26) and a second, negative-going branch (27) in the region of which the air ratio (λ) is less than 1, the method comprising the following steps:
- the determination of the position of the operating point (B₁, B₂, B₃, B₄) of the internal combustion engine (1) on the power curve (21, 22, 23, 24), wherein, in order to determine the position of the operating point (B₁, B₂, B₃, B₄), the ignition timing (ZZP) is adjusted in a first process step (40, 43, 51) and the speed reaction of the internal combustion engine (1) at the adjusted ignition timing (ZZP) is evaluated in a second process step (41, 44, 52);
- the alteration of the fuel quantity (x) supplied as a function of the determined operating point (B₁, B₂, B₃, B₄) in a third process step (42, 45, 53), if the determined operating point (B₁, B₂, B₃, B₄) is not the desired operating point (B₁, B₂, B₃, B₄).

2. Method according to claim 1,
**characterised in that** the ignition timing (ZZP) is "advanced" in the first process step (40).

3. Method according to claim 1 or 2,
**characterised in that** the ignition timing (ZZP) is continuously adjusted in the first process step (40, 43).

4. Method according to any of claims 1 to 3,
**characterised in that** the ignition timing (ZZP) is adjusted in the first process step (40) over a preset period of time (Δt) which includes several revolutions of the crankshaft (20).

5. Method according to any of claims 1 to 4,
**characterised in that** the fuel quantity (x) supplied is increased in the third process step (42, 45, 53), if it is detected that the operating point (B₁) of the internal combustion engine (1) lies on the first branch (25).

6. Method according to any of claims 1 to 5,
**characterised in that** the fuel quantity (x) supplied is reduced in the third process step (42, 45, 53), if it is detected that the operating point (B₃, B₄) of the internal combustion engine (1) lies on the second branch (27).

7. Method according to any of claims 1 to 6,
**characterised in that**, when determining the position of the operating point (B₁, B₂, B₃, B₄) in the first process step (43, 51), the fuel quantity (x) supplied is altered as well as the ignition timing (ZZP).

8. Method according to claim 7,
**characterised in that** the change of the fuel quantity (x) supplied in the first process step (43) is chosen such that there is no change in the speed (n) of the internal combustion engine (1) if the operating point (B₁, B₂, B₃, B₄) of the internal combustion engine (1) corresponds to the desired operating point (B₁, B₂, B₃, B₄).

9. Method according to claim 7,
**characterised in that** the ignition timing (ZZP) is adjusted in a controlled manner in the first process step (52), the ignition timing (ZZP) being controlled such that the speed is changed by less than 100 revolutions per minute.

10. Method according to any of claims 7 to 9,
**characterised in that** the fuel quantity (x) supplied is reduced in the first process step (43) and the ignition timing (ZZP) is "retarded".

11. Method according to any of claims 7 to 9,
**characterised in that** the fuel quantity (x) supplied is increased in the first process step and the ignition timing (ZZP) is "advanced".

12. Method according to any of claims 7 to 11,
**characterised in that**, in the first process step (43), the fuel quantity (x) supplied is altered first and the ignition timing (ZZP) is altered later, following a preset number of revolutions of the crankshaft (20).

13. Method according to any of claims 1 to 12,
**characterised in that** the method is carried out at full load of the internal combustion engine (1).

14. Method according to any of claims 1 to 13,
**characterised in that** the fuel is supplied via a metering valve (13, 13').

15. Method according to any of claims 1 to 14,
**characterised in that** the fuel is supplied via a carburettor (10).

16. Method according to any of claims 1 to 15,
**characterised in that** the fuel is supplied directly into the crankcase (4). ,

17. Method according to any of claims 1 to 15,
**characterised in that** the internal combustion engine (1) has an intake port (9) and the fuel is supplied into the intake port (9).

18. Method according to any of claims 1 to 15,
**characterised in that** the internal combustion engine (1) has at least one transfer passage (7) and the fuel is supplied into the transfer passage (7).

## Revendications

1. Procédé pour le fonctionnement d'un moteur à combustion interne, étant précisé que le moteur à combustion interne (1) comporte une chambre de combustion (3) qui est délimitée par un piston (5), que le piston (5) entraîne un vilebrequin (20) monté en rotation dans un carter de vilebrequin (4), que le moteur à combustion interne (1) comprend un dispositif pour l'amenée de carburant, un dispositif d'allumage et une commande (18), que la relation entre la puissance (P) du moteur à combustion interne (1) et le rapport air/carburant (λ) dans la chambre de combustion (3) est indiquée par une courbe de puissance (21, 22, 23, 24) qui présente une première branche (25), montante, un maximum (26) et une seconde branche (27), descendante, dans la zone de laquelle le rapport air/carburant (λ) est inférieur à 1, et que le procédé comprend les étapes qui consistent :
- à déterminer la position du point de fonctionnement (B₁, B₂, B₃, B₄) du moteur à combustion interne (1) sur la courbe de puissance (21, 22, 23, 24), étant précisé que pour déterminer la position du point de fonctionnement (B₁, B₂, B₃, B₄), le moment d'allumage (ZZP) est réglé lors d'une première étape de procédé (40, 43, 51) et la réaction de vitesse de rotation du moteur à combustion interne (1) en présence d'un moment d'allumage (ZZP) réglé est analysée lors d'une deuxième étape de procédé (41, 44, 52) ;
- à modifier la quantité de carburant amenée (x) en fonction du point de fonctionnement (B₁, B₂, B₃, B₄) déterminé, lors d'une troisième étape de procédé (42, 45, 53), si le point de fonctionnement (B₁, B₂, B₃, B₄) déterminé n'est pas le point de fonctionnement (B₁, B₂, B₃, B₄) souhaité.

2. Procédé selon la revendication 1,
**caractérisé en ce que** le moment d'allumage (ZZP) est réglé lors de la première étape de procédé (40) sur "avance".

3. Procédé selon la revendication 1 ou 2,
**caractérisé en ce que** le moment d'allumage (ZZP) est réglé lors de la première étape de procédé (40, 43) de manière continue.

4. Procédé selon l'une des revendications 1 à 3,
**caractérisé en ce que** la modification du moment d'allumage (ZZP) lors de la première étape de procédé (40) se fait sur une durée prédéfinie (Δt) qui comprend plusieurs tours du vilebrequin (20).

5. Procédé selon l'une des revendications 1 à 4,
**caractérisé en ce que** la quantité de carburant amenée (x) est accrue lors de la troisième étape de procédé (42, 45, 53), s'il est détecté que le point de fonctionnement (B₁) du moteur à combustion interne (1) est situé sur la première branche (25).

6. Procédé selon l'une des revendications 1 à 5,
**caractérisé en ce que** la quantité de carburant amenée (x) est réduite lors de la troisième étape de procédé (42, 45, 53), s'il est détecté que le point de fonctionnement (B₁) du moteur à combustion interne (1) est situé sur la seconde branche (27).

7. Procédé selon l'une des revendications 1 à 6,
**caractérisé en ce que** lorsque la position du point de fonctionnement (B₁, B₂, B₃, B₄) est déterminée lors de la première étape de procédé (43, 51) la quantité de carburant amenée (x) est également modifiée, en plus du moment d'allumage (ZZP).

8. Procédé selon la revendication 7,
**caractérisé en ce que** la modification de la quantité de carburant amenée (x), lors de la première étape de procédé (43), est choisie de telle sorte que cela n'entraîne aucune modification de la vitesse de rotation (n) du moteur à combustion interne (1) si le point de fonctionnement (B₁, B₂, B₃, B₄) dudit moteur (1) correspond au point de fonctionnement (B₁, B₂, B₃, B₄) souhaité.

9. Procédé selon la revendication 7,
**caractérisé en ce que** le réglage du moment d'allumage (ZZP) lors de la première étape de procédé (52) se fait de manière régulée, étant précisé que le moment d'allumage (ZZP) est régulé de telle sorte qu'une modification de vitesse de rotation de moins de 100 tours par minute se produise.

10. Procédé selon l'une des revendications 7 à 9,
**caractérisé en ce que** la quantité de carburant amenée (x) est réduite lors de la première étape de procédé (43) et le moment d'allumage (ZZP) est réglé sur "retard".

11. Procédé selon l'une des revendications 7 à 9,
**caractérisé en ce que** la quantité de carburant amenée (x) est accrue lors de la première étape de procédé et le moment d'allumage (ZZP) est réglé sur "avance".

12. Procédé selon l'une des revendications 7 à 11,
**caractérisé en ce que** lors de la première étape de procédé (43), la quantité de carburant amenée (x) est tout d'abord modifiée, et, un nombre prédéfini de tours du vilebrequin (20) plus tard, le moment d'allumage (ZZP) est modifié.

13. Procédé selon l'une des revendications 1 à 12,
**caractérisé en ce que** le procédé est mis en oeuvre en cas de pleine charge du moteur à combustion interne (1).

14. Procédé selon l'une des revendications 1 à 13,
**caractérisé en ce que** le carburant est amené par l'intermédiaire d'une soupape de dosage (13, 13').

15. Procédé selon l'une des revendications 1 à 14,
**caractérisé en ce que** le carburant est amené par l'intermédiaire d'un carburateur (10).

16. Procédé selon l'une des revendications 1 à 15,
**caractérisé en ce que** le carburant est amené directement dans le carter de vilebrequin (4).

17. Procédé selon l'une des revendications 1 à 15,
**caractérisé en ce que** le moteur à combustion interne (1) comporte un conduit d'aspiration (9) et **en ce que** le carburant est amené dans le conduit d'aspiration (9).

18. Procédé selon l'une des revendications 1 à 15,
**caractérisé en ce que** le moteur à combustion interne (1) comporte au moins un conduit de transfert (7) et **en ce que** le carburant est amené dans le conduit de transfert (7).
